# EUROPEAN PATENT APPLICATION

(11) **EP 4 787 728 A1**
(43) Date of publication of application: **05.08.2026**
(21) Application number: 24872909.7
(22) Date of filing: 25.09.2024
(51) Int. Cl.: H04B 7/06, H04B 7/08, H04W 72/25, H04W 56/00, H04W 24/08, H04W 72/0446, H04W 72/0457, H04W 72/044, H04W 92/18

(54) **METHOD AND DEVICE FOR TRANSMITTING AND RECEIVING SYNCHRONIZATION SIGNAL BLOCK IN MULTI-BEAM-BASED DEVICE-TO-DEVICE COMMUNICATION**

(30) Priority: 25.09.2023 KR 20230128580
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Maikowski & Ninnemann Patentanwälte Partnerschaft mbB
(86) International application number: PCT/KR2024/014493
(87) International publication number: WO 2025/071201

(57) **Abstract**

Proposed is an operation method of a first device (100) in a wireless communication system. The method may comprise the steps of: receiving a first device-to-device synchronization signal block from a second device (200) on the basis of a first beam; acquiring synchronization information on the basis of the first device-to-device synchronization signal block; and transmitting a second device-to-device synchronization signal block including the synchronization information on the basis of a second beam different from the first beam on the basis that reference signal reception power related to the first device-to-device synchronization signal block is greater than or equal to a first threshold value.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method that a first device may perform may be proposed. For example, the method may comprise: receiving, from a second device, a first inter-user equipment, UE, synchronization signal block based on a first beam; obtaining synchronization information based on the first inter-UE synchronization signal block; and transmitting a second inter-UE synchronization signal block including the synchronization information based on a second beam different from the first beam, based on reference signal received power related to the first inter-UE synchronization signal block being greater than or equal to a first threshold value.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: receive, from a second device, a first inter-user equipment, UE, synchronization signal block based on a first beam; obtain synchronization information based on the first inter-UE synchronization signal block; and transmit a second inter-UE synchronization signal block including the synchronization information based on a second beam different from the first beam, based on reference signal received power related to the first inter-UE synchronization signal block being greater than or equal to a first threshold value.

According to an embodiment of the present disclosure, a processing device adapted to control a first device may be proposed. For example, the first device may comprise: at least one processor; and at least one memory connected to the at least one processor and storing instructions. For example, the instructions, based on being executed by the at least one processor, may cause the first device to: receive, from a second device, a first inter-user equipment, UE, synchronization signal block based on a first beam; obtain synchronization information based on the first inter-UE synchronization signal block; and transmit a second inter-UE synchronization signal block including the synchronization information based on a second beam different from the first beam, based on reference signal received power related to the first inter-UE synchronization signal block being greater than or equal to a first threshold value.

According to an embodiment of the present disclosure, a non-transitory computer-readable storage medium storing instructions may be proposed. For example, the instructions, based on being executed, may cause a first device to: receive, from a second device, a first inter-user equipment, UE, synchronization signal block based on a first beam; obtain synchronization information based on the first inter-UE synchronization signal block; and transmit a second inter-UE synchronization signal block including the synchronization information based on a second beam different from the first beam, based on reference signal received power related to the first inter-UE synchronization signal block being greater than or equal to a first threshold value.

According to an embodiment of the present disclosure, a method that a second device may perform may be proposed. For example, the method may comprise: transmitting, to a first device, a first inter-user equipment, UE, synchronization signal block based on a first beam, wherein a synchronization signal may be obtained by the first device based on the first inter-UE synchronization signal block, and wherein a second inter-UE synchronization signal block, including the synchronization signal, may be transmitted by the first device based on a second beam different from the first beam, based on reference signal received power related to the first inter-UE synchronization signal block being greater than or equal to a first threshold value.

According to an embodiment of the present disclosure, a second device may comprise: at least one transceiver; at least one processor; and at least one memory connected to the at least one processor and storing instructions. For example, the instructions, based on being executed by the at least one processor, may cause the second device to: transmit, to a first device, a first inter-user equipment, UE, synchronization signal block based on a first beam, wherein a synchronization signal may be obtained by the first device based on the first inter-UE synchronization signal block, and a second inter-UE synchronization signal block, including the synchronization signal, may be transmitted by the first device based on a second beam different from the first beam, based on reference signal received power related to the first inter-UE synchronization signal block being greater than or equal to a first threshold value.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a synchronization source or a synchronization reference of V2X according to an embodiment of the present disclosure.
FIG. 10 shows a transmission spatial filter and a reception spatial filter, according to one embodiment of the present disclosure.
FIG. 11 shows a method for determining whether a reception spatial filter covers a transmission spatial filter, according to one embodiment of the present disclosure.
FIG. 12 shows a method for determining a beam (or beams) that is mutually exclusive, according to an embodiment of the present disclosure.
FIG. 13 shows a device for relaying an inter-UE synchronization signal by using a beam (or beams) that is mutually exclusive, according to an embodiment of the present disclosure.
FIG. 14 shows a procedure of operations that may be performed by a first device, according to an embodiment of the present disclosure.
FIG. 15 shows a procedure of operations that may be performed by a second device, according to an embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

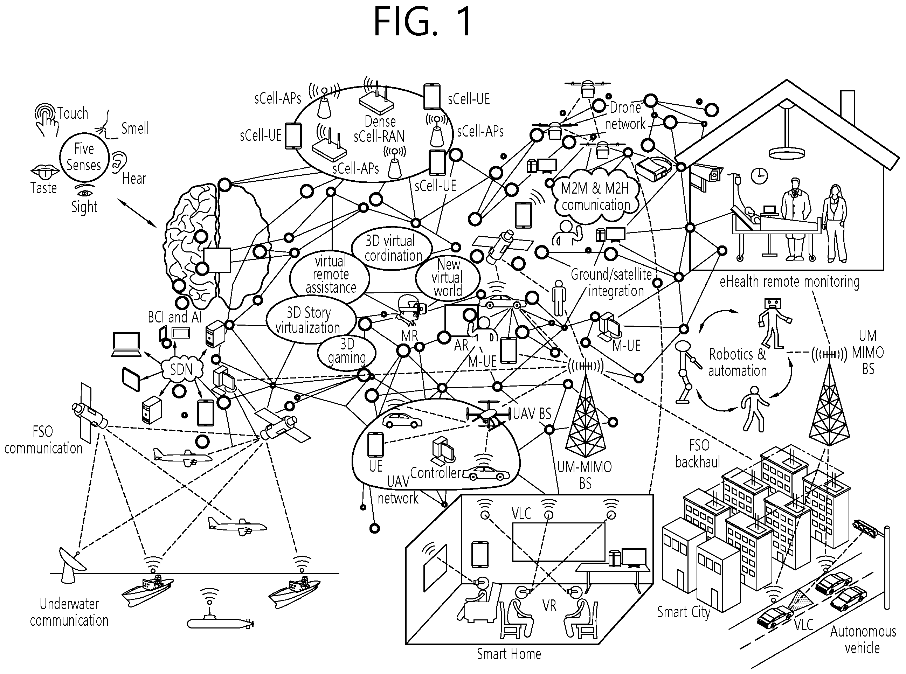

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

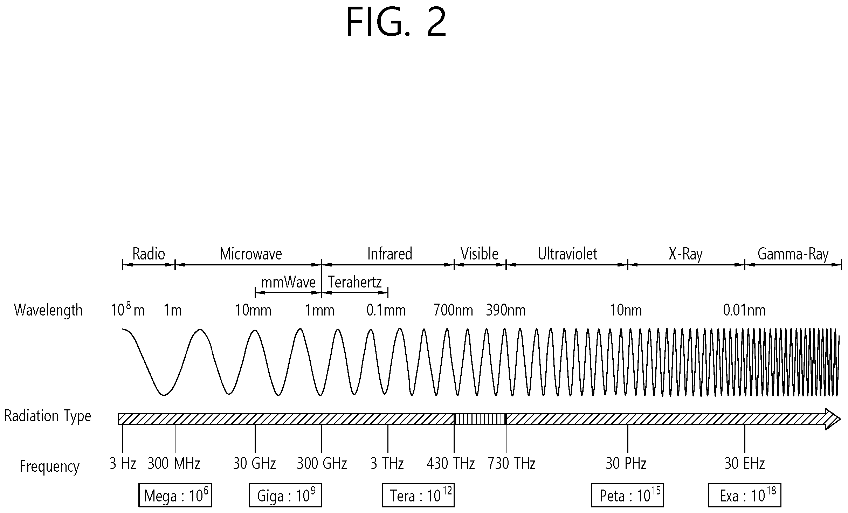

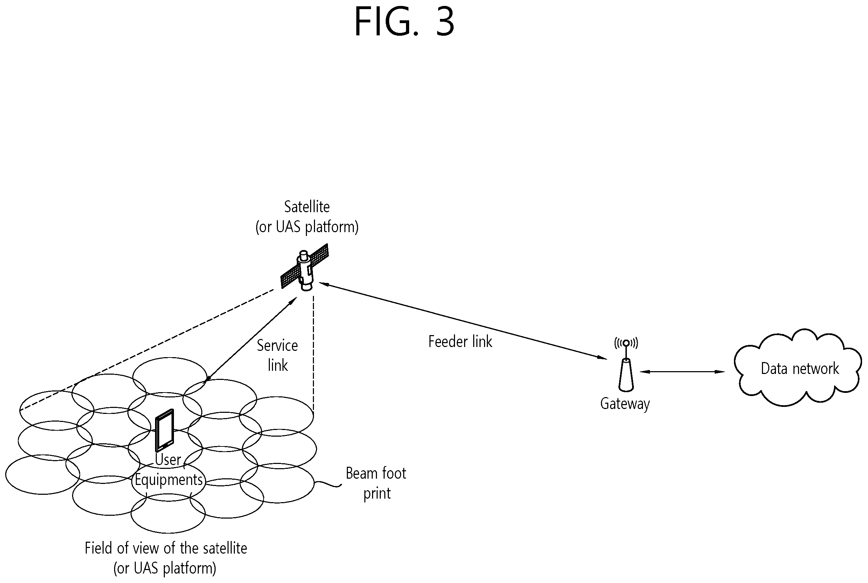

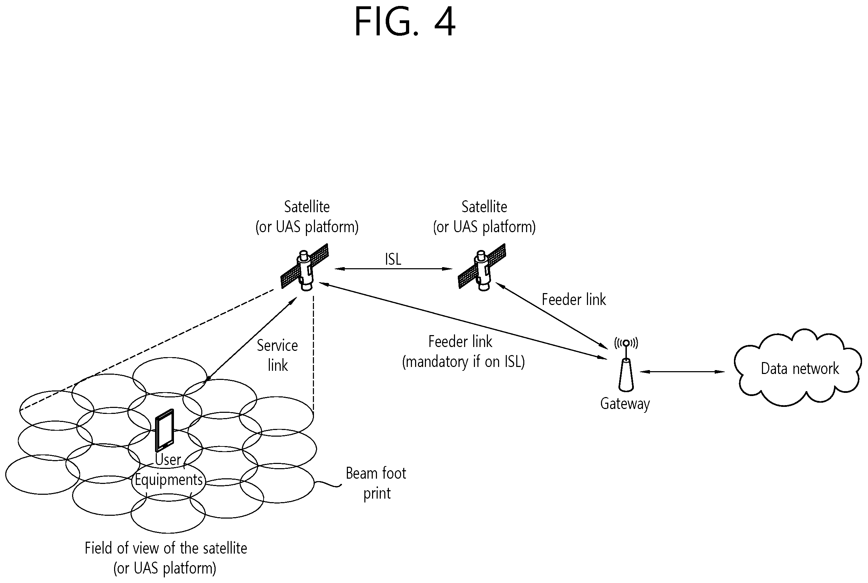

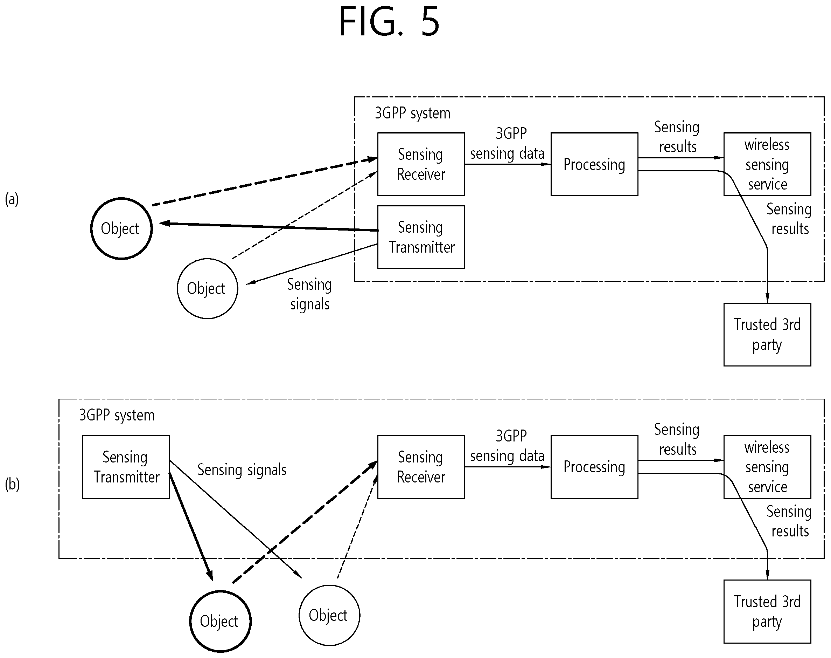

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

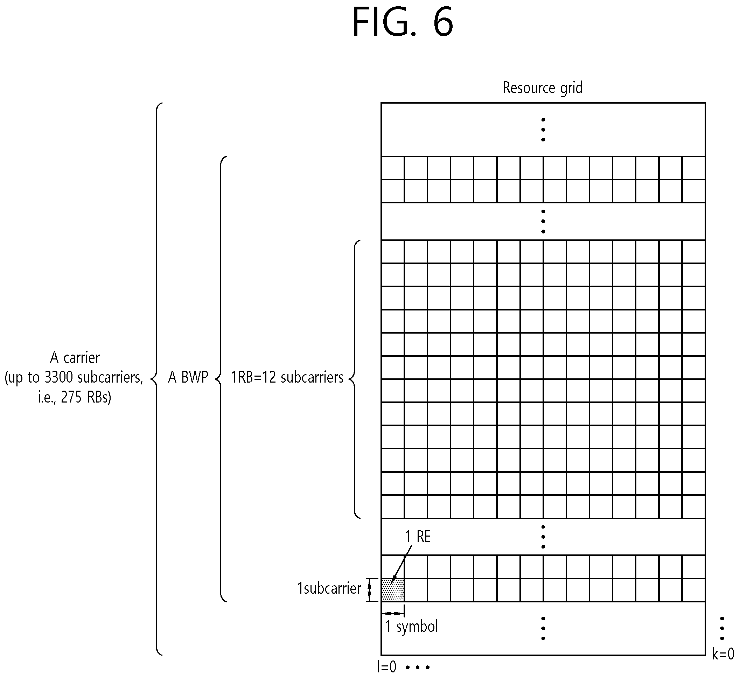

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

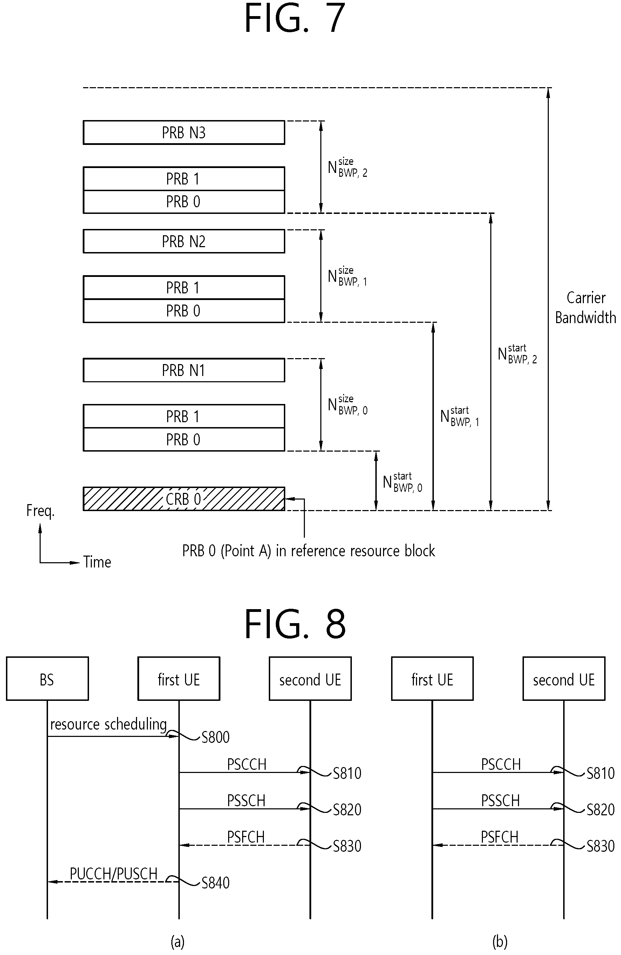

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, obtain of synchronization of an SL UE will be described. For example, an SL UE may refer to a UE that performs inter-UE communication (e.g., SL communication).

In a time division multiple access (e.g., TDMA; time division multiple access) system and a frequency division multiple access (e.g., FDMA; frequency division multiple access) system, accurate time and frequency synchronization is essential. If time and frequency synchronization is not accurately achieved, system performance may be degraded due to inter symbol interference (ISI) and inter carrier interference (ICI). This also applies to V2X. In V2X, for time/frequency synchronization, an inter-UE synchronization signal (e.g., an SL synchronization signal; sidelink synchronization signal, SLSS) may be used in a physical layer, and a master information block-sidelink-V2X (MIB-SL-V2X) may be used in a radio link control (RLC) layer.

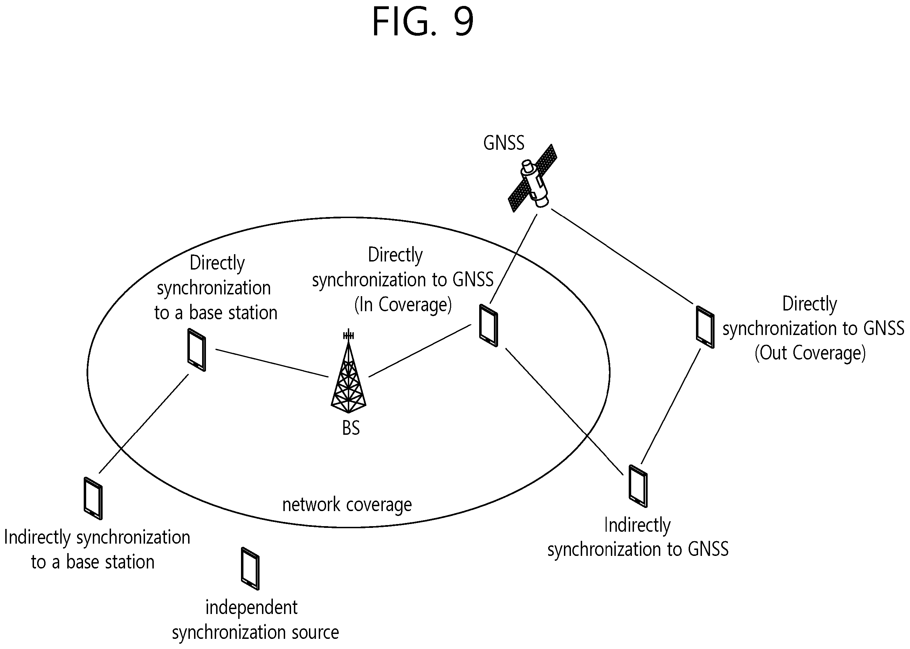

FIG. 9 shows a synchronization source or a synchronization reference of V2X according to an embodiment of the present disclosure. An embodiment of FIG. 9 may be combined with various embodiments of the present disclosure.

Referring to FIG. 9, in V2X, a UE may be directly synchronized to global navigation satellite systems (GNSS), or may be indirectly synchronized to GNSS through a UE (within network coverage or outside network coverage) that is directly synchronized to GNSS. When GNSS is configured as a synchronization source, a UE may calculate a DFN and a subframe number by using coordinated universal time (UTC) and a (pre-)configured direct frame number (DFN) offset.

Alternatively, a UE may be directly synchronized to a base station, or may be synchronized to another UE that is time/frequency synchronized to the base station. For example, the base station may be an eNB or a gNB. For example, when a UE is within network coverage, the UE may receive synchronization information provided by the base station and may be directly synchronized to the base station. Thereafter, the UE may provide synchronization information to another adjacent UE. When base station timing is configured as a synchronization reference, a UE may follow a cell associated with a corresponding frequency (when the UE is within cell coverage at the frequency), or a primary cell or a serving cell (when the UE is outside cell coverage at the frequency), for synchronization and downlink measurement.

A base station (for example, a serving cell) may provide a synchronization configuration for a carrier used for V2X or inter-UE communication (e.g., SL communication). In this case, a UE may follow the synchronization configuration received from the base station. If a UE does not detect any cell on the carrier used for the V2X or SL communication and does not receive a synchronization configuration from the serving cell, the UE may follow a preconfigured synchronization configuration.

Alternatively, a UE may be synchronized to another UE that does not obtain synchronization information directly or indirectly from a base station or GNSS. A synchronization source and a preference may be preconfigured for a UE. Alternatively, a synchronization source and a preference may be configured through a control message provided by a base station.

An SL synchronization source may be associated with a synchronization priority. For example, a relationship between a synchronization source and a synchronization priority may be defined as shown in Table 3 or Table 4 below. Table 3 or Table 4 is merely an example, and the relationship between a synchronization source and a synchronization priority may be defined in various forms.

**[Table 3]**

| Priority level | GNSS-based synchronization | eNB/gNB-based synchronization |
|---|---|---|
| P0 | GNSS | Base station |
| P1 | Every UE directly synchronized to GNSS | Every UE directly synchronized to a base station |
| P2 | Every UE indirectly synchronized to GNSS | Every UE indirectly synchronized to base station |
| P3 | Every other UE | GNSS |
| P4 | N/A | Every UE directly synchronized to GNSS |
| P5 | N/A | Every UE indirectly synchronized to GNSS |
| P6 | N/A | Every other UE |

**[Table 4]**

| Priority level | GNSS-based synchronization | eNB/gNB-based synchronization |
|---|---|---|
| P0 | GNSS | Base station |
| P1 | Every UE directly synchronized to GNSS | Every UE directly synchronized to a base station |
| P2 | Every UE indirectly synchronized to GNSS | Every UE indirectly synchronized to base station |
| P3 | Base station | GNSS |
| P4 | Every UE directly synchronized to a base station | Every UE directly synchronized to GNSS |
| P5 | Every UE indirectly synchronized to base station | Every UE indirectly synchronized to GNSS |
| P6 | Remaining UE(s) with lower priority | Remaining UE(s) with lower priority |

In Table 3 or Table 4, P0 may mean a highest priority, and P6 may mean a lowest priority. In Table 3 or Table 4, a base station may include at least one of a gNB or an eNB.

Whether to use GNSS-based synchronization or base station-based synchronization may be (pre-)configured. In a singlecarrier operation, a UE may derive transmission timing of the UE from an available synchronization reference having a highest priority.

Meanwhile, each inter-UE synchronization signal (e.g., SLSS) may have an inter-UE synchronization identifier (e.g., an SL synchronization identifier; Sidelink Synchronization Identifier, SLSS ID).

For example, in LTE inter-UE communication (e.g., SL communication) or LTE V2X, a value of an inter-UE synchronization signal identifier (e.g., SLSS) may be defined based on a combination of two different inter-UE primary synchronization signal (e.g., S-PSS) sequences and 168 different inter-UE secondary synchronization signal (e.g., S-SSS) sequences. For example, a number of inter-UE synchronization signal identifiers (e.g., SLSS) may be 336. For example, a value of an inter-UE synchronization signal identifier (e.g., SLSS) may be one of 0 to 335.

For example, in the case of NR inter-UE communication (e.g., SL communication) or NR V2X, a value of an inter-UE synchronization signal identifier (e.g., SLSS) may be defined based on a combination of 2 different inter-UE primary synchronization signal (e.g., S-PSS) sequences and 336 different inter-UE secondary synchronization signal (e.g., S-SSS) sequences. For example, the number of inter-UE synchronization signal identifiers (e.g., SLSS) may be 672. For example, a value of an inter-UE synchronization signal identifier (e.g., SLSS) may be any one of 0 to 671. For example, among the 2 different inter-UE primary synchronization signals (e.g., S-PSS), one inter-UE primary synchronization signal (e.g., S-PSS) may be associated with in-coverage, and the other inter-UE primary synchronization signal (e.g., S-PSS) may be associated with out-of-coverage. For example, inter-UE synchronization signal identifiers (e.g., SLSS) of 0 to 335 may be used in in-coverage, and inter-UE synchronization signal identifiers (e.g., SLSS) of 336 to 671 may be used in out-of-coverage.

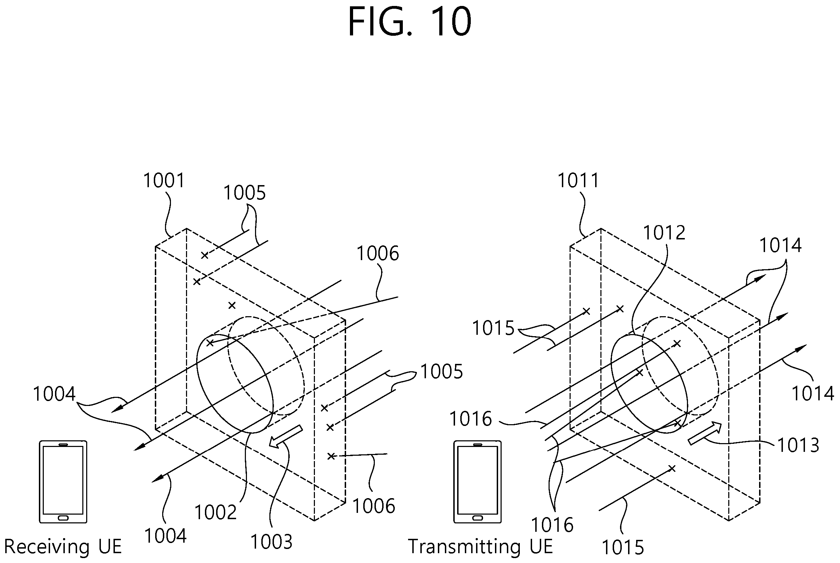

FIG. 10 shows a transmission spatial filter and a reception spatial filter, according to one embodiment of the present disclosure. The embodiment of FIG. 10 may be combined with various embodiments of the present disclosure.

Referring to FIG. 10, a reception spatial filter 1001 used by a receiving UE for a reception operation and a transmission spatial filter 1011 used by a transmitting UE for a transmission operation are shown.

For example, a reception spatial filter may only pass signals with the same beam direction as 1003. That is, the receiving UE may only receive a transmission performed based on a beam with the direction of 1003.

Thus, transmissions of 1006 transmitted based on a beam with a different beam direction than the beam direction of 1003 may not pass the reception spatial filter. 1004 is a signal transmitted based on a beam with the same beam direction as 1003, which may pass the reception spatial filter and be received by a receiving UE.

For example, a reception spatial filter may have a beam size/width of 1002 and may only pass signals that are performed based on a beam that is included within the beam size/width. That is, a receiving UE may only receive transmissions that are performed based on a beam with a size/width that is included within the beam size/width of 1002.

Thus, transmissions of 1005 that contacted the reception spatial filter outside of the size/width of 1002 may not pass the reception spatial filter among signal components transmitted based on a beam of a size/width greater than the size/width of 1002. Since 1004 has contacted the reception spatial filter in a region included in the size/width of 1002, it may pass through the reception spatial filter and be received by a receiving UE. On the other hand, 1005 has contacted the reception spatial filter outside of the size/width of 1002, and therefore cannot pass the reception spatial filter and cannot be received by the receiving UE.

For example, 1004 may be received by the receiving UE since its direction is the same as the direction of the beam 1003 through which the reception spatial filter passes, and since it contacts the reception spatial filter in a range that is included in the size/width of 1002. Here, for example, if the transmissions of 1004 are all of the transmitted components based on a specific beam (i.e., all of the signal components transmitted along with 1004 are successfully received by the receiving UE), then the reception spatial filter may be a spatial filter that covers the transmission spatial filter related to the specific beam.

For example, a transmission spatial filter may only pass signals that are the same as the beam direction of 1013. In other words, when a transmission UE performs a transmission operation based on the transmission spatial filter, the signal components 1014 that pass through the transmission spatial filter and are finally transmitted may all have the direction of 1013.

Thus, transmissions of 1016 transmitted based on a beam that is different from the beam direction of 1013 may not pass through the transmission spatial filter. Signal components 1014 with the same beam direction as 1013 may pass through the transmission spatial filter and be transmitted to a receiving UE.

For example, a transmission spatial filter may have a beam size/width of 1012, and may only pass signal components that are included within the beam size/width. That is, when a transmission UE performs a transmission operation based on the transmission spatial filter, only signal components that are included within the beam size/width of 1012 may be passed through the transmission spatial filter and finally transmitted.

Thus, signal components that are not included in the size/width of 1012 may not pass through the transmission spatial filter. Since 1014 are signal components that are included in the size/width of 1012, they may pass through the transmission spatial filter and be transmitted to a receiving UE. On the other hand, 1015 are signal components that are not included in the size/width of 1012 and therefore cannot pass through the transmission spatial filter and be transmitted to the receiving UE.

For example, the direction of 1014 is the same as the beam direction 1013 through which the transmission spatial filter passes, and the signal components included in the size/width of 1012, it may be transmitted to a receiving UE. Here, for example, if the transmissions of 1014 all pass through a reception spatial filter used by a receiving UE for receive operation (i.e., if the direction of the signal components of 1014 is the same as the beam direction related to the reception spatial filter, and the signal components of 1014 are all included in the size/width of the reception spatial filter), then the reception spatial filter may be a spatial filter that covers the transmission spatial filter of 1011.

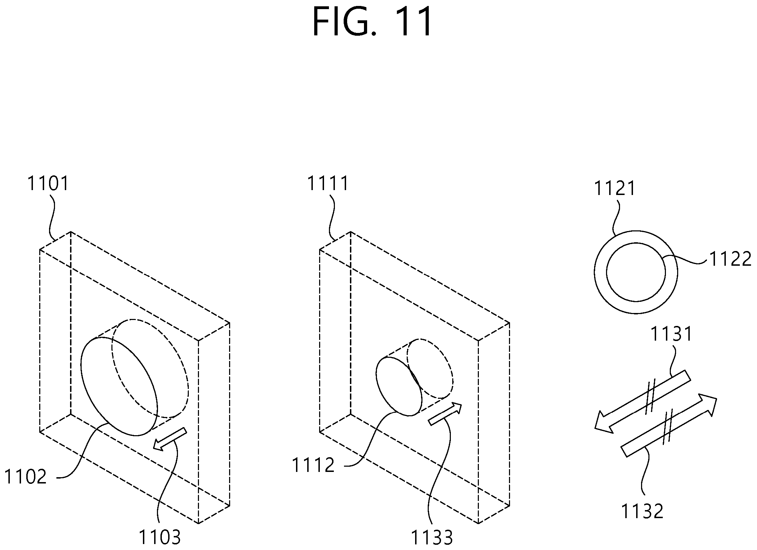

FIG. 11 shows a method for determining whether a reception spatial filter covers a transmission spatial filter, according to one embodiment of the present disclosure. The embodiment of FIG. 11 may be combined with various embodiments of the present disclosure.

Referring to FIG. 11, a reception spatial filter 1101 used by a receiving UE for a reception operation and a transmission spatial filter 1111 used by a transmitting UE for a transmission operation are shown.

For example, the direction of the signal components passed by the reception spatial filter may be 1103, and the direction of the signal components transmitted through the transmission spatial filter may be 1113. For example, the reception beam direction related to the reception spatial filter may be 1103, and the transmission beam direction related to the transmission spatial filter may be 1113.

For example, the size/width of the reception filter may be 1102. That is, the reception spatial filter passes only those signal components included in the 1102, and only those signal components that pass through the reception spatial filter may be received by a receiving UE.

For example, the size/width of the transmission spatial filter may be 1112. That is, the transmission spatial filter passes only those signal components included in the 1112, and only those signal components that pass through the transmission spatial filter may be transmitted to a receiving UE.

1121 and 1122 are cross sections of the size/width of a transmission spatial filter or the size/width of a reception spatial filter.

For example, if the 1121 is the size/width of a transmission spatial filter, the 1122 is the size/width of a reception spatial filter, and since the 1122 is included in the 1121, the size/width of the transmission spatial filter is larger than the size/width of the reception spatial filter, some of the signal components that pass through the transmission spatial filter and are transmitted to a receiving UE may not pass through the reception spatial filter. In this case, the reception spatial filter may be a spatial filter that does not cover the transmission spatial filter.

Conversely, for example, if the 1121 is the size/width of a reception spatial filter, the 1122 is the size/width of a transmission spatial filter, and since the 1122 is included in the 1121, the size/width of the transmission spatial filter is smaller than the size/width of the reception spatial filter, all of the signal components transmitted through the transmission spatial filter to a receiving UE may pass through the reception spatial filter. In this case, the reception spatial filter may be a spatial filter that covers the transmission spatial filter.

1131 represents 1103, i.e., the reception beam direction related to the reception spatial filter, and 1132 represents 1113, i.e., the transmission beam direction related to the transmission spatial filter. For example, as shown in the figure, since only when 1131 and 1132 are horizontal may all signal components transmitted by a transmitting UE based on the transmitting spatial filter pass through a receiving spatial filter, the receiving spatial filter may be the to be a spatial filter that covers the transmitting spatial filter when all signal components transmitted by the transmitting UE based on the transmitting spatial filter pass through the receiving spatial filter only when 1131 and 1132 are horizontal.

Meanwhile, during inter-UE communication (e.g., SL communication), a UE may perform transmission and/or reception based on multiple panels and/or beam directions, and in this case, a method for managing a spatial setting, such as information related to the beam (a beam of the beam direction) or a spatial domain transmission/reception filter, may need to be defined. Hereinafter, a UE may be interpreted as being interchangeable/substitutable with various devices including a transceiver, and an inter-UE synchronization signal block (e.g., S-SSB) may be interpreted as being interchangeable/substitutable with an inter-device synchronization signal block.

Meanwhile, in the case of base station-to-UE communication (e.g., DL communication), a base station has been able to indicate antenna port quasi-co-location (QCL) information to a UE through a transmission configuration indicator (e.g., TCI). In particular, when a base station-to-UE communication (e.g., DL communication) signal is received through "typeD," the base station has been able to configure/indicate whether the UE is to assume the same spatial RX parameter or the same beam information as that of a specific synchronization signal block (e.g., SSB; synchronization signal block) or a channel state information reference signal (e.g., CSI-RS).

Meanwhile, in the case of UE-to-base station communication (e.g., UL communication), a base station has been able to configure/indicate to a UE that a spatial setting or a spatial domain transmission filter for transmission of a UE-to-base station physical shared channel (e.g., PUSCH) is to follow a spatial setting used for transmission of a specific sounding reference signal (e.g., SRS) resource of the UE, transmission of a physical random access channel (e.g., PRACH), and/or reception of a signal in base station-to-UE communication (e.g., DL communication).

Meanwhile, in inter-UE communication (e.g., SL communication), when a UE is located at or beyond a certain level (or a threshold value, or a threshold distance) from a synchronization source, the UE may perform transmission of an inter-UE synchronization signal block (e.g., S-SSB), and through this, an area having the same synchronization may be expanded. For example, the distance may include a radio distance or a geographical distance.

And/or, for example, a UE may perform transmission of an inter-UE synchronization signal block (e.g., S-SSB) when configured by a base station, and through this, an area having the same synchronization may be expanded.

According to an embodiment of the present disclosure, when a UE receives, from another UE, an inter-UE synchronization signal block (e.g., S-SSB) corresponding to a first transmission beam (or transmitted based on the first transmission beam) (or based on a reception beam corresponding to the first transmission beam), a UE may transmit an inter-UE synchronization signal block (e.g., S-SSB).

And/or, for example, when a quality measurement value based on the inter-UE synchronization signal block (e.g., S-SSB) is less than or equal to a first threshold value or less than the first threshold value, a UE may transmit an inter-UE synchronization signal block (e.g., S-SSB). For example, the quality measurement value may include reference signal received power (e.g., RSRP) or a signal-to-interference-plus-noise ratio (e.g., (L1-)SINR).

And/or, for example, when a quality measurement value based on the inter-UE synchronization signal block (e.g., S-SSB) is greater than or equal to a second threshold value or greater than the second threshold value, a UE may transmit an inter-UE synchronization signal block (e.g., S-SSB). For example, the quality measurement value may include reference signal received power (e.g., RSRP) or a signal-to-interference-plus-noise ratio (e.g., (L1-)SINR).

And/or, for example, when a quality measurement value based on an inter-UE synchronization signal block (e.g., S-SSB) is less than or equal to a first threshold value or less than the first threshold value, and greater than or equal to a second threshold value or greater than the second threshold value, a UE may transmit an inter-UE synchronization signal block (e.g., S-SSB). For example, the quality measurement value may include reference signal received power (e.g., RSRP) or a signal-to-interference-plus-noise ratio (e.g., (L1-)SINR).

For example, a transmission beam used by a UE to transmit an inter-UE synchronization signal block (e.g., S-SSB) (e.g., a second transmission beam) may be determined based on a reception beam used by the UE when receiving an inter-UE synchronization signal block (e.g., S-SSB) corresponding to the first transmission beam.

For example, a second transmission beam may include a beam that is identical to or associated with a first transmission beam, a beam corresponding to or associated with a beam having a direction opposite to the first transmission beam, a beam (or beams) that is mutually exclusive with the first transmission beam, or a beam (or beams) having low correlation with the first transmission beam.

For example, a beam (or beams) that is mutually exclusive with a first transmission beam (or a beam (or beams) having low correlation with the first transmission beam) may refer to a beam (or beams) that does not mutually cover each other. For example, the mutually exclusive beam (or beams) may refer to a beam (or beams) in which a ratio of an area in which beam directions overlap is less than or equal to a threshold value.

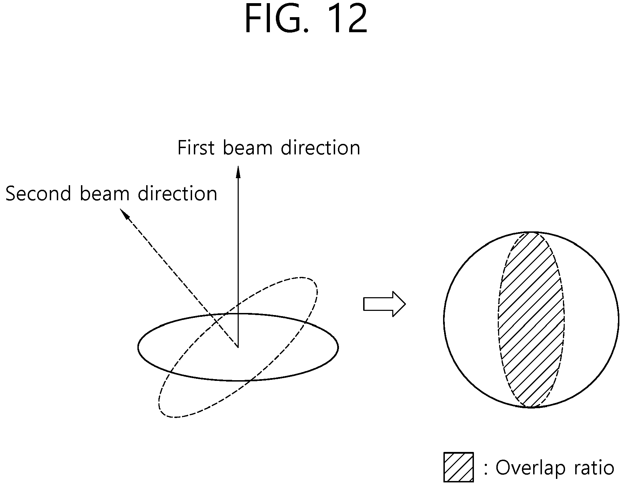

FIG. 12 shows a method for determining a beam (or beams) that is mutually exclusive, according to an embodiment of the present disclosure. The embodiment of FIG. 12 may be combined with various embodiments of the present disclosure.

Referring to FIG. 12, a first beam direction, which is a beam direction of a first beam, and a second beam direction, which is a beam direction of a second beam, are shown, and when it is assumed that a circle perpendicular to the first beam direction and having an area A exists as shown on a left side of FIG. 12, and that a circle perpendicular to the second beam direction and having the same area A also exists, and that an angle formed by the first beam direction and the second beam direction is B, an area of a shaded ellipse shown on a right side of FIG. 12 may be A cos B, and here, a ratio of an area in which the beam directions overlap may be a ratio of A cos B to A, that is, the ratio of the area in which the beam directions overlap may be cos B, which may be a value obtained by applying a cosine function to the angle formed by each beam direction.

For example, a transmission beam for an inter-UE synchronization signal block (e.g., S-SSB) transmitted by a UE may be selected in a direction that further expands coverage of an inter-UE synchronization signal block (e.g., S-SSB) received by the UE.

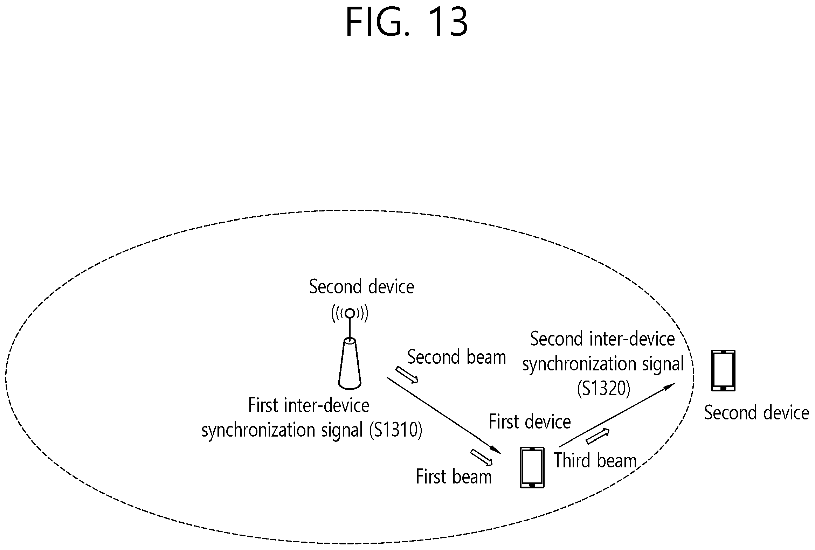

FIG. 13 shows a device for relaying an inter-UE synchronization signal by using a beam (or beams) that is mutually exclusive, according to an embodiment of the present disclosure. The embodiment of FIG. 13 may be combined with various embodiments of the present disclosure.

Referring to FIG. 13, a second device transmitting a first inter-device synchronization signal and a first device receiving the first inter-device synchronization signal are shown. In FIG. 13, the second device is illustrated as a base station, but features of the second device of the present embodiment may be extended to another device (e.g., a UE) capable of performing inter-device communication.

In step S1310, the second device may transmit the first inter-device synchronization signal to the first device based on a second beam (a transmission beam). Here, the first device may receive the first inter-device synchronization signal based on a first beam (a reception beam). For example, the first device may measure reference signal received power (e.g., RSRP) for the first inter-device synchronization signal.

For example, the first device may determine whether to perform relaying for the first inter-device synchronization signal based on reference signal received power (e.g., RSRP) for the first inter-device synchronization signal and at least one threshold value. For example, whether the relaying is performed may be determined according to various embodiments of the present disclosure. In the present embodiment, it is assumed that the relaying is performed.

In step S1320, the first device may transmit, to a third device, a second inter-device synchronization signal including synchronization information obtained from the first inter-device synchronization signal, based on a third beam (a transmission beam). The transmission operation may be a relaying operation. For example, the third beam may be a beam (or beams) that is mutually exclusive with the first beam (or the second beam). For example, the third beam may be a beam that does not mutually cover the first beam (or the second beam).

Thereafter, since a third device that has received the second inter-device synchronization signal obtains the same synchronization information even though the third device is a device that cannot directly receive an inter-device synchronization signal from the second device (based on a difference in beam direction, a reception beam and a transmission beam not mutually covering each other, and/or the reception beam and the transmission beam being mutually exclusive), an effect of expanding coverage of synchronization initiated at the first device may occur through the relay operation of the present embodiment.

According to an embodiment of the present disclosure, a UE relaying an inter-UE synchronization signal block (e.g., S-SSB) may transmit or relay an inter-UE synchronization signal block (e.g., S-SSB) based on a received inter-UE synchronization signal block (e.g., S-SSB) in a single or a plurality of inter-UE synchronization signal block (e.g., S-SSB) occasion(s). For example, a UE relaying an inter-UE synchronization signal block (e.g., S-SSB) may transmit or relay an inter-UE synchronization signal block (e.g., S-SSB) based on an inter-UE synchronization signal block (e.g., S-SSB) received in a single or a plurality of inter-UE synchronization signal block (e.g., S-SSB) occasion(s). For example, a UE relaying an inter-UE synchronization signal block (e.g., S-SSB) may transmit or relay an inter-UE synchronization signal block (e.g., S-SSB) in a single or a plurality of inter-UE synchronization signal block (e.g., S-SSB) occasion(s) based on a received inter-UE synchronization signal block (e.g., S-SSB).

According to an embodiment of the present disclosure, a transmission beam for an inter-UE synchronization signal block (e.g., S-SSB) transmitted by a UE (a UE that has received an inter-UE synchronization signal block (e.g., S-SSB) from another UE) may be different according to a (beam) quality or a quality range for the inter-UE synchronization signal block (e.g., S-SSB) received by the UE.

According to an embodiment of the present disclosure, a transmission beam for an inter-UE synchronization signal block (e.g., S-SSB) transmitted by a UE (a UE that has received an inter-UE synchronization signal block (e.g., S-SSB) from another UE) and/or whether and how to relay the inter-UE synchronization signal block (e.g., S-SSB) may be different according to a purpose of transmitting the inter-UE synchronization signal block (e.g., S-SSB) (for example, a synchronization purpose and/or beam management).

According to an embodiment of the present disclosure, the first threshold value and/or the second threshold value may be (pre-)configured per inter-UE carrier (e.g., SL carrier) and/or per inter-UE bandwidth part (e.g., SL BWP).

For example, the second threshold value may be a value less than or equal to the first threshold value. This may be to prevent a UE from performing relaying of an inter-UE synchronization signal block (e.g., S-SSB) when beam quality is too low.

According to an embodiment of the present disclosure, when a base station is a synchronization reference of a UE, a UE may transmit an inter-UE synchronization signal block (e.g., S-SSB), and a transmission beam used for transmitting the inter-UE synchronization signal block (e.g., S-SSB) may be determined by the UE.

And/or, for example, when a quality measurement value based on a reference signal transmitted by a base station (for example, reference signal received power (e.g., RSRP)) is less than or equal to a (pre-)configured threshold value or less than the (pre-)configured threshold value, a UE may transmit an inter-UE synchronization signal block (e.g., S-SSB), and a transmission beam used for transmitting the inter-UE synchronization signal block (e.g., S-SSB) may be determined by the UE.

And/or, for example, when a UE is (pre-)configured by a base station to transmit an inter-UE synchronization signal block (e.g., S-SSB), a UE may transmit an inter-UE synchronization signal block (e.g., S-SSB), and a transmission beam used for transmitting the inter-UE synchronization signal block (e.g., S-SSB) may be determined by the UE.

And/or, for example, when a UE has GNSS as a synchronization reference, a UE may transmit an inter-UE synchronization signal block (e.g., S-SSB), and a transmission beam used for transmitting the inter-UE synchronization signal block (e.g., S-SSB) may be determined by the UE.

According to an embodiment of the present disclosure, when a UE transmits an inter-UE synchronization signal block (e.g., S-SSB) by using a specific transmission beam, a resource to be used for transmission of the inter-UE synchronization signal block (e.g., S-SSB) may be selected from among inter-UE synchronization signal block (e.g., S-SSB) resources for which a quality value of an inter-UE synchronization signal block (e.g., S-SSB), measured based on a reception beam associated with the transmission beam, is less than or equal to a certain level (or a threshold value) or less than the certain level (or the threshold value). For example, the quality value may include a reference signal received power (e.g., RSRP) value or a signal-to-interference-plus-noise ratio (e.g., (L1-)SINR) value.

For example, the inter-UE synchronization signal block (e.g., S-SSB) resource may be one classified as sl-ssb-TimeAllocation1, sl-ssb-TimeAllocation2, or sl-ssb-TimeAllocation3.

In embodiments of the present disclosure, a method for transmitting and relaying an inter-UE synchronization signal block (e.g., S-SSB) has been described; however, the present disclosure is not limited thereto, and a concept of the present disclosure may be extended and applied to a third reference signal (RS) or a channel state information reference signal (e.g., CSI-RS). For example, in embodiments of the present disclosure, a transmitting entity and a receiving entity of an inter-UE synchronization signal block (e.g., S-SSB) have been described as a UE, but an embodiment related to the transmitting entity and the receiving entity of the inter-UE synchronization signal block (e.g., S-SSB) may be extended and applied to a device including a transceiver.

Various schemes of the present disclosure may be applied differently per unicast session (group), per cast type, per transmission priority value, per reception priority value, per inter-UE transmission (e.g., SL transmission) in which inter-UE feedback (e.g., SL HARQ-ACK feedback) is enabled/disabled, per inter-UE feedback (e.g., SL HARQ-ACK feedback) option, per QoS parameter, per (remaining) PDB, per congestion control level, per (transmission and/or reception) resource pool, per mobilityrelated information of a UE (for example, speed, velocity, direction, acceleration, location, height, etc.), per inter-UE communication (e.g., SL communication) transmission or reception, per HARQ process, per beam process, per source ID, per destination ID, and/or per transport block (e.g., TB).

For example, in an embodiment of the present disclosure, a unit of (pre-)configuration may be configured in a form of the different combinations. For example, in an embodiment of the present disclosure, parameter indication and management through an inter-UE physical channel (e.g., PSCCH and/or PSSCH) may be performed in units of the different combinations.

In various embodiments of the present disclosure, spatial setting and/or transmission configuration indication (e.g., TCI) information and/or QCL information may refer to each other and/or may be interpreted as being replaced with beam-related information, a beam direction, a spatial domain transmission filter, or a spatial domain reception filter.

In various embodiments of the present disclosure, spatial setting information for transmission being the same may mean that a spatial domain transmission filter (spatial domain TX filter) of a UE is the same for two different transmission signals.

n various embodiments of the present disclosure, spatial setting information for reception being the same may mean that two different reception signals are in a QCL "TypeD" relationship and/or are in a relationship of using the same spatial reception parameter.

In various embodiments of the present disclosure, (pre-)configuration may mean pre-configuration (based on signaling from a server or at a time of product shipment), configuration from a base station, and/or configuration through PC5-RRC between UEs.

Various features described in the present disclosure may be applied differently per inter-UE channel (e.g., SL channel). Various schemes of the present disclosure may be applied differently according to a type of information included in the inter-UE channel (e.g., SL channel).

The proposed method may be applied to a device described below. First, a processor 202 of a receiving UE may configure at least one partial bandwidth (e.g., BWP). Then, the processor 202 of the receiving UE may control a transceiver 206 of the receiving UE to receive, from a transmitting UE, an inter-UE communication (e.g., SL communication)-related physical channel and/or an inter-UE communication (e.g., SL communication)-related reference signal on the at least one partial bandwidth (e.g., BWP).

For example, when inter-UE communication (e.g., SL communication) is performed in FR2, a UE may perform transmission and/or reception operations based on multiple panels and/or beam directions. A UE performing inter-UE communication may transmit and receive an inter-UE synchronization signal block (e.g., S-SSB) to achieve synchronization with a receiving UE. In FR2, since a transmission beam/reception beam may be applied to an inter-UE synchronization signal block (e.g., S-SSB) operation, a method for performing an inter-UE synchronization signal block (e.g., S-SSB) relay operation to expand a synchronization cluster may need to be defined.

For example, it may be necessary to determine a transmission beam to be used when a UE relays an inter-UE synchronization signal block (e.g., S-SSB) received from another node. For example, relaying an inter-UE synchronization signal block (e.g., S-SSB) by using a transmission beam in a direction in which reception beam quality for the inter-UE synchronization signal block (e.g., S-SSB) is good may be inefficient in terms of expanding inter-UE synchronization signal block (e.g., S-SSB) coverage.

According to an embodiment of the present disclosure, a UE that intends to relay an inter-UE synchronization signal block (e.g., S-SSB) after receiving the inter-UE synchronization signal block (e.g., S-SSB) may, when receiving the inter-UE synchronization signal block (e.g., S-SSB) and when a quality of a reception beam used for the reception is greater than or equal to a certain level, relay the inter-UE synchronization signal block (e.g., S-SSB) through a beam that does not cover the reception beam. According to an embodiment of the present disclosure, during an inter-UE synchronization signal block (e.g., S-SSB) relaying operation, a transmission beam may be configured in a direction that increases coverage. For example, the transmission beam may be configured in a direction opposite to a direction of a reception beam having good quality.

According to various embodiments of the present disclosure, by allowing relaying of an inter-UE synchronization signal block (e.g., S-SSB) to be extended in a direction in which reception beam quality is not good, unnecessary consumption of transmission power may be reduced and efficient expansion of a synchronization cluster may be enabled. According to various embodiments of the present disclosure, selection of a transmission beam for increasing inter-UE synchronization signal block (e.g., S-SSB) coverage may be efficiently performed.

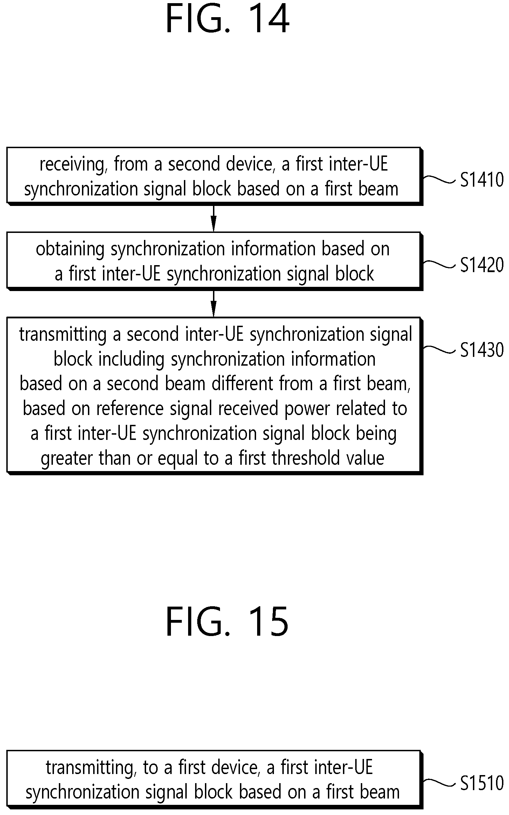

FIG. 14 shows a procedure of operations that may be performed by a first device, according to an embodiment of the present disclosure. The embodiment of FIG. 14 may be combined with various embodiments of the present disclosure.

Referring to FIG. 14, in step S1410, a first device may receive, from a second device, a first inter-user equipment, UE, synchronization signal block based on a first beam. In step S1420, the first device may obtain synchronization information based on the first inter-UE synchronization signal block. In step S1430, the first device may transmit a second inter-UE synchronization signal block including the synchronization information based on a second beam different from the first beam, based on reference signal received power related to the first inter-UE synchronization signal block being greater than or equal to a first threshold value.

For example, the second beam may be a beam that does not cover the first beam.

For example, a ratio at which a direction of the second beam overlaps a direction of the first beam may be less than or equal to a threshold value.

For example, the first threshold value may be configured per carrier on which the first inter-UE synchronization signal block is received.

For example, the first threshold value may be configured per partial bandwidth on which the first inter-UE synchronization signal block is received.

For example, the second inter-UE synchronization signal block may be transmitted based on reference signal received power related to the first inter-UE synchronization signal block being greater than or equal to the first threshold value and less than or equal to a second threshold value.

For example, the second threshold value may be configured per carrier on which the first inter-UE synchronization signal block is received.

For example, the second threshold value may be configured per partial bandwidth on which the first inter-UE synchronization signal block is received.

For example, the second threshold value may be a value less than or equal to the first threshold value.

For example, the second device may be a base station or a global navigation satellite system, GNSS.

For example, additionally, the first device may determine to use the second beam for a transmission of the second inter-UE synchronization signal block.

For example, the second beam may be determined to be used for the transmission of the second inter-UE synchronization signal block based on reference signal received power measured based on a third beam corresponding to the second beam being greater than or equal to the second threshold value.

For example, the method may be performed by a first device.

The above-described embodiment may be applied to various devices described below. First, a processor 102 of a first device 100 may control a transceiver 106 to receive, from a second device 200 a first inter-user equipment, UE, synchronization signal block based on a first beam. And, the processor 102 of the first device 100 may obtain synchronization information based on the first inter-UE synchronization signal block. And, the processor 102 of the first device 100 may control the transceiver 106 to transmit a second inter-UE synchronization signal block including the synchronization information based on a second beam different from the first beam, based on reference signal received power related to the first inter-UE synchronization signal block being greater than or equal to a first threshold value.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: receive, from a second device, a first inter-user equipment, UE, synchronization signal block based on a first beam; obtain synchronization information based on the first inter-UE synchronization signal block; and transmit a second inter-UE synchronization signal block including the synchronization information based on a second beam different from the first beam, based on reference signal received power related to the first inter-UE synchronization signal block being greater than or equal to a first threshold value.

For example, the second beam may be a beam that does not cover the first beam.

For example, a ratio at which a direction of the second beam overlaps a direction of the first beam may be less than or equal to a threshold value.

For example, the first threshold value may be configured per carrier on which the first inter-UE synchronization signal block is received.

For example, the first threshold value may be configured per partial bandwidth on which the first inter-UE synchronization signal block is received.

For example, the second inter-UE synchronization signal block may be transmitted based on reference signal received power related to the first inter-UE synchronization signal block being greater than or equal to the first threshold value and less than or equal to a second threshold value.

For example, the second threshold value may be configured per carrier on which the first inter-UE synchronization signal block is received.

For example, the second threshold value may be configured per partial bandwidth on which the first inter-UE synchronization signal block is received.

For example, the second threshold value may be a value less than or equal to the first threshold value.

For example, the second device may be a base station or a global navigation satellite system, GNSS.

For example, additionally, the instructions may comprise: determining to use the second beam for a transmission of the second inter-UE synchronization signal block.

For example, the second beam may be determined to be used for the transmission of the second inter-UE synchronization signal block based on reference signal received power measured based on a third beam corresponding to the second beam being greater than or equal to the second threshold value.

For example, the method may be performed by a first device.

According to an embodiment of the present disclosure, a processing device adapted to control a first device may be proposed. For example, the first device may comprise: at least one processor; and at least one memory connected to the at least one processor and storing instructions. For example, the instructions, based on being executed by the at least one processor, may cause the first device to: receive, from a second device, a first inter-user equipment, UE, synchronization signal block based on a first beam; obtain synchronization information based on the first inter-UE synchronization signal block; and transmit a second inter-UE synchronization signal block including the synchronization information based on a second beam different from the first beam, based on reference signal received power related to the first inter-UE synchronization signal block being greater than or equal to a first threshold value.

According to an embodiment of the present disclosure, a non-transitory computer-readable storage medium storing instructions may be proposed. For example, the instructions, based on being executed, may cause a first device to: receive, from a second device, a first inter-user equipment, UE, synchronization signal block based on a first beam; obtain synchronization information based on the first inter-UE synchronization signal block; and transmit a second inter-UE synchronization signal block including the synchronization information based on a second beam different from the first beam, based on reference signal received power related to the first inter-UE synchronization signal block being greater than or equal to a first threshold value.

FIG. 15 shows a procedure of operations that may be performed by a second device, according to an embodiment of the present disclosure. The embodiment of FIG. 15 may be combined with various embodiments of the present disclosure.

Referring to FIG. 15, in step S1510, a second device may transmit, to a first device, a first inter-user equipment, UE, synchronization signal block based on a first beam. For example, a synchronization signal may be obtained by the first device based on the first inter-UE synchronization signal block, and a second inter-UE synchronization signal block, including the synchronization signal, may be transmitted by the first device based on a second beam different from the first beam, based on reference signal received power related to the first inter-UE synchronization signal block being greater than or equal to a first threshold value.

For example, the second beam may be a beam that does not cover the first beam.

The above-described embodiment may be applied to various devices described below. First, a processor 202 of a second device 200 may control a transceiver 206 to transmit, to a first device 100, a first inter-user equipment, UE, synchronization signal block based on a first beam. For example, a synchronization signal may be obtained by the first device 100 based on the first inter-UE synchronization signal block, and a second inter-UE synchronization signal block, including the synchronization signal, may be transmitted by the first device 100 based on a second beam different from the first beam, based on reference signal received power related to the first inter-UE synchronization signal block being greater than or equal to a first threshold value.

According to an embodiment of the present disclosure, a second device may comprise: at least one transceiver; at least one processor; and at least one memory connected to the at least one processor and storing instructions. For example, the instructions, based on being executed by the at least one processor, may cause the second device to: transmit, to a first device, a first inter-user equipment, UE, synchronization signal block based on a first beam, wherein a synchronization signal may be obtained by the first device based on the first inter-UE synchronization signal block, and a second inter-UE synchronization signal block, including the synchronization signal, may be transmitted by the first device based on a second beam different from the first beam, based on reference signal received power related to the first inter-UE synchronization signal block being greater than or equal to a first threshold value.

For example, the second beam may be a beam that does not cover the first beam.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

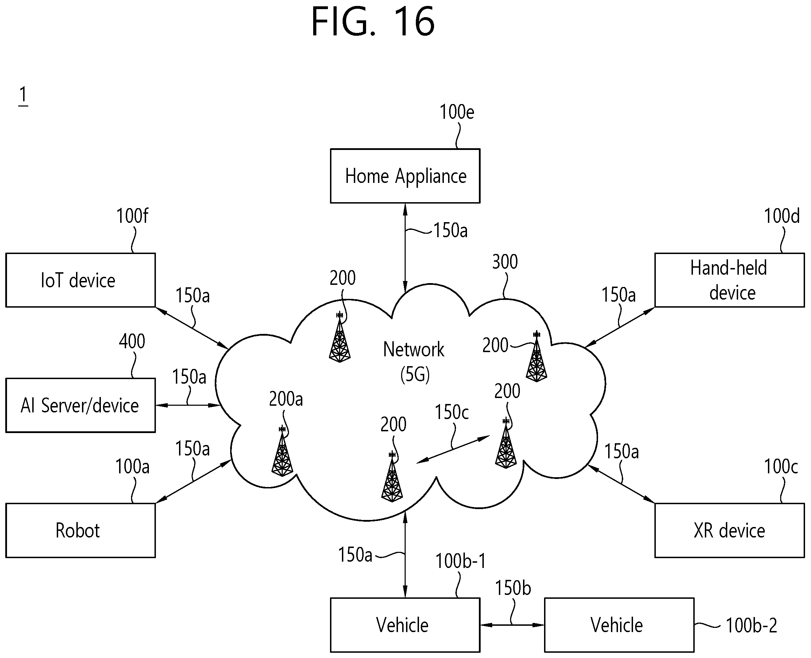

FIG. 16 shows a communication system 1, based on an embodiment of the present disclosure. The embodiment of FIG. 16 may be combined with various embodiments of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

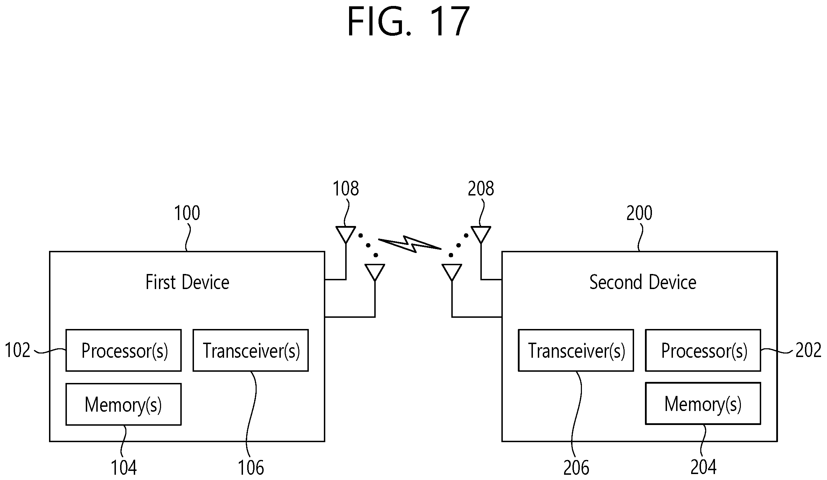

FIG. 17 shows wireless devices, based on an embodiment of the present disclosure. The embodiment of FIG. 17 may be combined with various embodiments of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

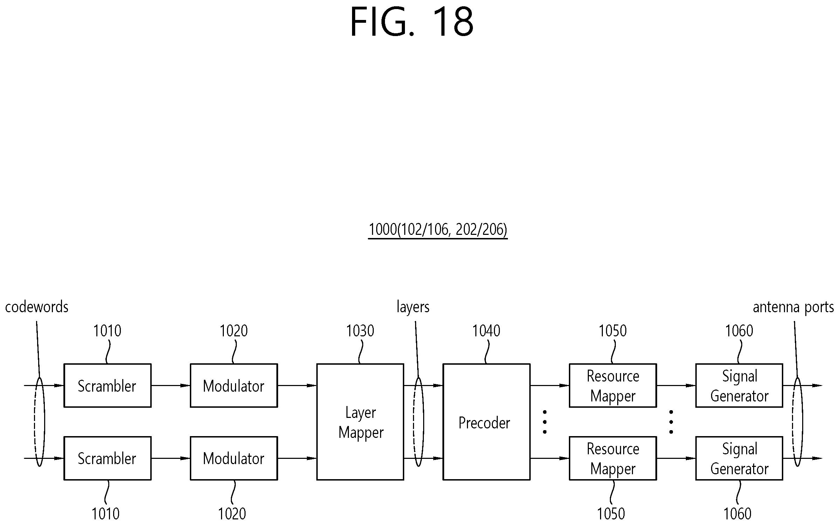

FIG. 18 shows a signal process circuit for a transmission signal, based on an embodiment of the present disclosure. The embodiment of FIG. 18 may be combined with various embodiments of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

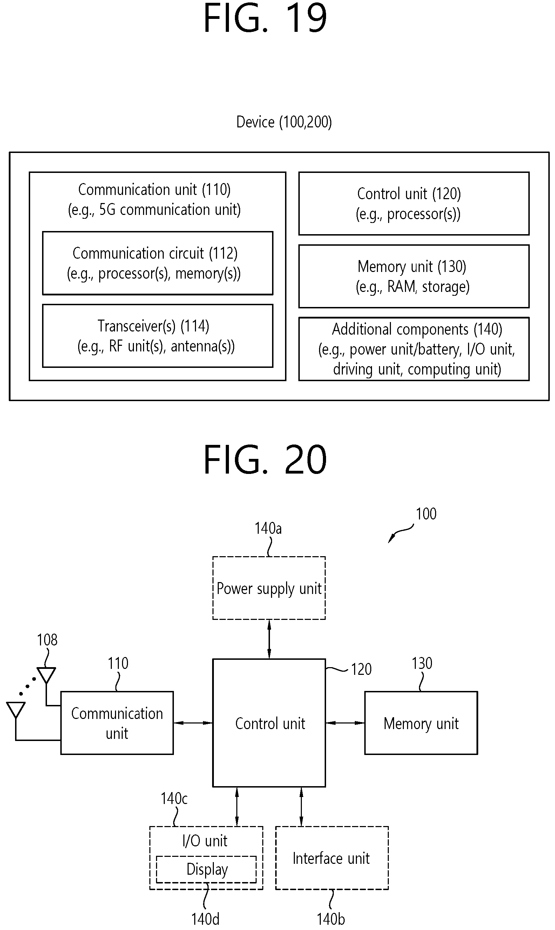

FIG. 19 shows another example of a wireless device, based on an embodiment of the present disclosure. The wireless device may be implemented in various forms according to a use-case/service (refer to FIG. 16). The embodiment of FIG. 19 may be combined with various embodiments of the present disclosure.

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 20 may be combined with various embodiments of the present disclosure.

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

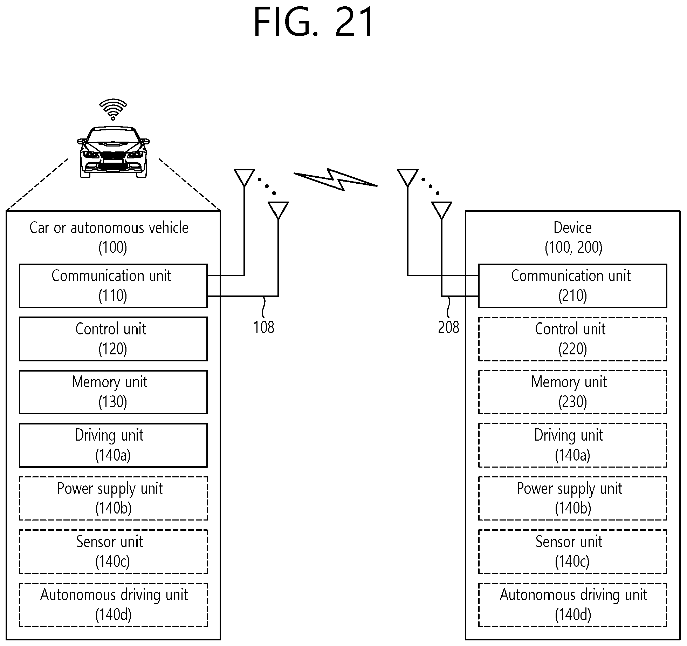

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 21 may be combined with various embodiments of the present disclosure.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
receiving, from a second device, a first inter-user equipment, UE, synchronization signal block based on a first beam;
obtaining synchronization information based on the first inter-UE synchronization signal block; and
transmitting a second inter-UE synchronization signal block including the synchronization information based on a second beam different from the first beam, based on reference signal received power related to the first inter-UE synchronization signal block being greater than or equal to a first threshold value.

2. The method of claim 1, wherein the second beam is a beam that does not cover the first beam.

3. The method of claim 1, wherein a ratio at which a direction of the second beam overlaps a direction of the first beam is less than or equal to a threshold value.

4. The method of claim 1, wherein the first threshold value is configured per carrier on which the first inter-UE synchronization signal block is received.

5. The method of claim 1, wherein the first threshold value is configured per partial bandwidth on which the first inter-UE synchronization signal block is received.

6. The method of claim 1, wherein the second inter-UE synchronization signal block is transmitted based on reference signal received power related to the first inter-UE synchronization signal block being greater than or equal to the first threshold value and less than or equal to a second threshold value.

7. The method of claim 6, wherein the second threshold value is configured per carrier on which the first inter-UE synchronization signal block is received.

8. The method of claim 6, wherein the second threshold value is configured per partial bandwidth on which the first inter-UE synchronization signal block is received.

9. The method of claim 6, wherein the second threshold value is a value less than or equal to the first threshold value.

10. The method of claim 1, wherein the second device is a base station or a global navigation satellite system, GNSS.

11. The method of claim 1, further comprising:
determining to use the second beam for a transmission of the second inter-UE synchronization signal block.

12. The method of claim 11, wherein the second beam is determined to be used for the transmission of the second inter-UE synchronization signal block based on reference signal received power measured based on a third beam corresponding to the second beam being greater than or equal to the second threshold value.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
receive, from a second device, a first inter-user equipment, UE, synchronization signal block based on a first beam;
obtain synchronization information based on the first inter-UE synchronization signal block; and
transmit a second inter-UE synchronization signal block including the synchronization information based on a second beam different from the first beam, based on reference signal received power related to the first inter-UE synchronization signal block being greater than or equal to a first threshold value.

15. A processing device adapted to control a first device comprising:
at least one processor; and
at least one memory connected to the at least one processor and storing instructions,
wherein the instructions, based on being executed by the at least one processor, cause the first device to:
receive, from a second device, a first inter-user equipment, UE, synchronization signal block based on a first beam;
obtain synchronization information based on the first inter-UE synchronization signal block; and
transmit a second inter-UE synchronization signal block including the synchronization information based on a second beam different from the first beam, based on reference signal received power related to the first inter-UE synchronization signal block being greater than or equal to a first threshold value.

16. A non-transitory computer-readable storage medium storing instructions,
wherein the instructions, based on being executed, cause a first device to:
receive, from a second device, a first inter-user equipment, UE, synchronization signal block based on a first beam;
obtain synchronization information based on the first inter-UE synchronization signal block; and
transmit a second inter-UE synchronization signal block including the synchronization information based on a second beam different from the first beam, based on reference signal received power related to the first inter-UE synchronization signal block being greater than or equal to a first threshold value.

17. A method comprising:
transmitting, to a first device, a first inter-user equipment, UE, synchronization signal block based on a first beam,
wherein a synchronization signal is obtained by the first device based on the first inter-UE synchronization signal block, and
wherein a second inter-UE synchronization signal block, including the synchronization signal, is transmitted by the first device based on a second beam different from the first beam, based on reference signal received power related to the first inter-UE synchronization signal block being greater than or equal to a first threshold value.

18. The method of claim 17, wherein the second beam is a beam that does not cover the first beam.

19. A second device comprising:
at least one transceiver;
at least one processor; and
at least one memory connected to the at least one processor and storing instructions,
wherein the instructions, based on being executed by the at least one processor, cause the second device to:
transmit, to a first device, a first inter-user equipment, UE, synchronization signal block based on a first beam,
wherein a synchronization signal is obtained by the first device based on the first inter-UE synchronization signal block, and
wherein a second inter-UE synchronization signal block, including the synchronization signal, is transmitted by the first device based on a second beam different from the first beam, based on reference signal received power related to the first inter-UE synchronization signal block being greater than or equal to a first threshold value.

20. The second device of claim 19, wherein the second beam is a beam that does not cover the first beam.
